# EUROPÄISCHE PATENTANMELDUNG

(11) **EP 0 852 922 A1**
(43) Veröffentlichungstag der Anmeldung: **15.07.1998**
(21) Anmeldenummer: 97120695.8
(22) Anmeldetag: 26.11.1997
(51) Int. Cl.: A47H 1/02, F16B 7/18, F16B 7/02, F16B 9/02

(54) **Verbindungsvorrichtung**

(30) Priorität: 08.01.1997 DE 29700144 U
(71) Anmelder: MHZ HACHTEL GmbH & Co. KG, D-70771 Leinfelden-Echterdingen (DE)
(72) Erfinder: Fetsch, Rudolf Dr., 97990 Weikersheim (DE); Frank, Richard, 97996 Niederstetten (DE)
(74) Vertreter: Möbus, Daniela, Dr.-Ing.

(57) **Zusammenfassung**

Eine Verbindungsvorrichtung für zwei jeweils mit einer Innenbohrung (12, 13) versehene Gegenstände (10, 11), insbesondere zweier Vorhangstangenabschnitte, mit zwei in die Innenbohrungen (12, 13) einsetzbaren Hülsenkörpern (14, 15), die mit einem Innengewinde versehen und radial aufspreizbar sind, und mit einem zylindrischen Kopplungskörper (18), der beidseitig mit einem Außengewinde (18.1, 18.2) versehen ist, das in das Innengewinde der Hülsenkörper (14, 15) einschraubbar ist und dabei die Hülsenkörper (14, 15) radial aufspreizt.

## Beschreibung

Bei sehr langen Fensterfronten ist das Anbringen durchgehender Vorhangstangen nicht möglich. Es werden deshalb mehrere Teilabschnitte zur Gesamtlänge der Vorhangstange zusammengesetzt, wobei die Verbindungsstellen zwischen den einzelnen Stangenabschnitten im Bereich von Wand- oder Deckenhaltern erfolgen. Da die Wand- und Deckenhalter aus optischen Gründen nicht an jeder beliebigen Stelle im Bereich der Fensterfront plaziert werden können, ist die Verwendung von Normlangen für Vorhangstangen und das beliebige Kürzen der Stangen bisher nicht möglich.

Der Erfindung liegt die Aufgabe zugrunde, eine Verbindungsvorrichtung zweier Gegenstände zu schaffen, die auch dann noch einsetzbar ist, wenn mindestens einer der Gegenstände an der Verbindungsstelle gekürzt wird.

Die Aufgabe wird gelöst durch eine Verbindungsvorrichtung für zwei jeweils mit einer Innenbohrung versehene Gegenstände, insbesondere zweier Vorhangstangenabschnitte mit zwei in die Innenbohrungen einsetzbaren Hülsenkörpern, die mit einem Innengewinde versehen und radial aufspreizbar sind, und einem zylindrischen Kopplungskörper, der beidseitig mit einem Außengewinde versehen ist, das in die Innengewinde der Hülsenkörper einschraubbar ist und dabei die Hülsenkörper radial aufspreizt. Mit dieser erfindungsgemäßen Verbindungseinrichtung lassen sich Vorhangstangenabschnitte beliebiger Länge - und auch außerhalb von Wand- oder Deckenhaltern - miteinander verbinden. Die Vorhangstangenabschnitte können dabei an der Verbindungsstelle beliebig gekürzt werden, da die Innenbohrungen kein Innengewinde aufweisen. Da die Hülsenkörper und der Kopplungskörper derart gestaltbar sind, daß sie nach Herstellung der Verbindung der beiden Vorhangstangenabschnitte nach außen nicht sichtbar sind, entsteht auf der Außenseite ein unmittelbarer Übergang zwischen den beiden Stangenabschnitten, der die Bewegung eines Vorhangs nicht behindert. Die erfindungsgemäße Verbindungsvorrichtung ist dabei nicht auf die Verbindung zweier Vorhangstangenabschnitte beschränkt. Es lassen sich mit ihr vielmehr beliebige Gegenstände verbinden, die mit einer Innenbohrung versehen sind. Dabei kann der Kopplungskörper vorteilhafterweise mit einem konischen Bereich zum Aufspreizen der Hülsenkörper versehen sein.

Bei anderen Anwendungsfällen, beispielsweise beim Ansetzen eines Endstücks an eine Vorhangstange ist es nicht unbedingt erforderlich oder auch nicht möglich, daß beide zu verbindende Gegenstände eine Innenbohrung aufweisen. Die Erfindung betrifft daher auch eine Verbindungsvorrichtung für zwei Gegenstände, von denen nur einer mit einer Innenbohrung versehen ist und der andere einen in die Innenbohrung einführbaren Gewindestift aufweist, mit einem in die Innenbohrung einsetzbaren Hülsenkörper, der mit einem Innengewinde versehen und radial aufspreizbar ist, wobei der Gewindestift in den Hülsenkörper einschraubbar ist und dabei den Hülsenkörper radial aufspreizt. Bei einer solchen Verbindung ist kein gesonderter Kopplungskörper notwendig. Dieser wird ersetzt durch den unmittelbar mit einem der Gegenstände verbundenen Gewindestift. Die eigentliche Verbindungstechnik durch radiales Aufspreizen eines mit einem Innengewinde versehenen Hülsenkörpers ist jedoch die gleiche wie bei der Verbindungsvorrichtung für zwei mit einer Innenbohrung versehene Gegenstände. Der Gewindestift kann hierzu ebenfalls vorteilhafterweise mit einem konischen Bereich zum besseren Aufspreizen des Hülsenkörpers versehen sein. Der oder die Hülsenkörper der beiden erfindungsgemäßen Verbindungsvorrichtungen können zur Ermöglichung des radialen Aufspreizens bereichsweise längsgeschlitzt sein. Sie lassen sich außerdem äußerst kostengünstig fertigen, wenn sie als Kunststoff-Spritzgußteile ausgebildet sind.

Nachfolgend werden bevorzugte Ausführungsformen erfindungsgemäßer Verbindungsvorrichtungen anhand der Zeichnung näher erläutert:

Im einzelnen zeigen:
- Fig. 1: eine Seitenansicht einer Verbindungsvorrichtung zwei Vorhangstangenabschnitte mit Innenbohrung;
- Fig. 2: eine Seitenansicht einer Verbindungsvorrichtung eines Vorhangstangenendstücks mit einer Vorhangstange.

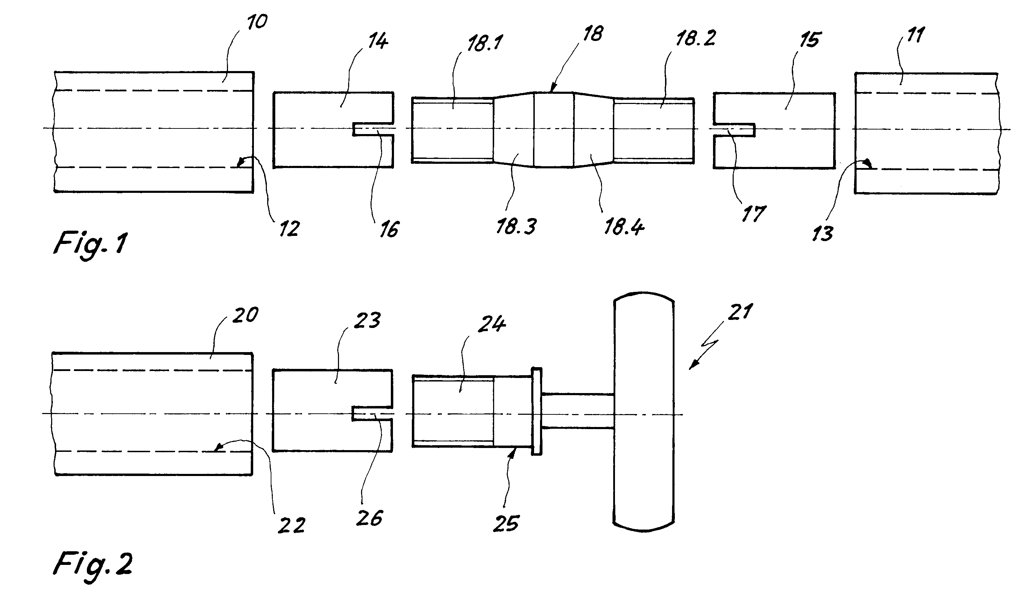

Fig. 1 zeigt die Endabschnitte 10 und 11 zweier Vorhangstangen, die jeweils mit Innenbohrungen 12 und 13 versehen bzw. als Hohlstangen ausgeführt sind. In die Innenbohrungen 12 und 13 werden Hülsenkörper 14 und 15 eingeführt, die ein Innengewinde aufweisen und mit Längsschlitzen 16 und 17 versehen sind. Anschließend wird in einen der Hülsenkörper, beispielsweise 14, ein Kopplungskörper, der mit zwei mit einem Außengewinde versehenen Endbereichen 18.1, 18.2 versehen ist, eingeschraubt. Dabei spreizt ein an den Außengewindebereich 18.1 anschließender konischer Bereich 18.3 den Hülsenkörper 14 auf und verspannt diesen damit in der Innenbohrung 12 der Vorhangstange 10. Anschließend wird der zweite Vorhangstangenabschnitt 11 mit dem eingesetzten Hülsenkörper 15 auf das zweite mit einem Außengewinde versehene Ende 18.2 des Kopplungskörpers 18 aufgeschraubt, wobei der Hülsenkörper 15 durch den konischen Bereich 18.4 im Anschluß an den Außengewindebereich 18.3 des Kopplungskörpers 18 ebenfalls aufgespreizt wird und sich mit der Innenbohrung 13 des Vorhangstangenabschnittes 11 verspannt. Nach Herstellung der Verbindung stoßen die beiden Vorhangstangenabschnitte 10 und 11 unmittelbar aneinander, d. h. der Kopplungskörper 18 ist von außen nicht mehr zu sehen.

Fig. 2 zeigt in der Seitenansicht eine ganz ähnliche Verbindung zwischen einem Endabschnitt einer Vorhangstange 20 und einem Vorhangstangenendstück 21. Auch hier weist die Vorhangstange 20 eine Innenbohrung 22 auf, in die ein mit einem Innengewinde versehener Hülsenkörper 23, der außerdem mit Längsschlitzen 26 versehen ist, einführbar ist. Im Gegensatz zur Verbindungsvorrichtung nach Fig. 1 ist nun jedoch kein gesonderter Kopplungskörper vorgesehen. Vielmehr ist am Vorhangstangenendstück 21 unmittelbar ein Gewindestift 24 angeordnet, der in das Innengewinde des Hülsenkörpers 23 einschraubbar ist. Der Gewindestift 24 weist außerdem eine konische Fläche 25 auf, mit der er den Hülsenkörper 23 radial aufspreizt, wodurch dieser in der Innenbohrung 22 der Vorhangstange 20 verspannt wird.

Bei beiden Vorrichtungen der Fig. 1 und 2 kann mindestens einer der beiden zu verbindenden Gegenstände 10, 11 bzw. 20, 21 beliebig abgelängt werden, ohne die Verbindung zu gefährden. Das Vorsehen von Innengewinden in den zu verbindenden Teil ist nicht notwendig.

## Patentansprüche

1. Verbindungsvorrichtung für zwei jeweils mit einer Innenbohrung (12, 13) versehene Gegenstände (10, 11), insbesondere zweier Vorhangstangenabschnitte, mit zwei in die Innenbohrungen (12, 13) einsetzbaren Hülsenkörpern (14, 15), die mit einem Innengewinde versehen und radial aufspreizbar sind, und mit einem zylindrischen Kopplungskörper (18), der beidseitig mit einem Außengewinde (18.1, 18.2) versehen ist, das in das Innengewinde der Hülsenkörper (14, 15) einschraubbar ist und dabei die Hülsenkörper (14, 15) radial aufspreizt.

2. Verbindungsvorrichtung nach Anspruch 1, dadurch gekennzeichnet, daß der Kopplungskörper (18) mit konischen Bereichen (18.3, 18.4) zum Aufspreizen der Hülsenkörper (14, 15) versehen ist.

3. Verbindungsvorrichtung für zwei Gegenstände (20, 21), von denen einer (20) mit einer Innenbohrung (22) versehen ist und der andere (21) einen in die Innenbohrung (22) einführbaren Gewindestift (24) aufweist, mit einem in die Innenbohrung (22) einsetzbaren Hülsenkörper (23), der mit einem Innengewinde versehen und radial aufspreizbar ist, wobei der Gewindestift (24) in den Hülsenkörper (23) einschraubbar ist und dabei den Hülsenkörper (24) radial aufspreizt.

4. Verbindungsvorrichtung nach Anspruch 3, dadurch gekennzeichnet, daß der Gewindestift (24) mit einem konischen Bereich (25) zum Aufspreizen des Hülsenkörpers (23) versehen ist.

5. Verbindungsvorrichtung nach einem der Ansprüche 1 bis 4, dadurch gekennzeichnet, daß der oder die Hülsenkörper (14, 15, 23) bereichsweise längsgeschlitzt (16, 17, 26) sind.

6. Verbindungsvorrichtung nach einem der Ansprüche 1 bis 5, dadurch gekennzeichnet, daß der oder die Hülsenkörper (14, 15, 23) Kunststoff-Spritzgußteile sind.
